# EUROPÄISCHE PATENTSCHRIFT

(11) **EP 1 733 062 B1**
(45) Veröffentlichungstag und Bekanntmachung des Hinweises auf die Patenterteilung: **28.05.2008**
(21) Anmeldenummer: 05707064.1
(22) Anmeldetag: 28.01.2005
(51) Int. Cl.: C21D 9/46

(54) **VERFAHREN ZUR HERSTELLUNG EINES BAUTEILS DURCH UMFORMEN EINER PLATINE UND VORRICHTUNG ZUR DURCHFÜHRUNG DES VERFAHRENS**
METHOD FOR PRODUCING A COMPONENT BY RESHAPING A PLATE, AND DEVICE FOR CARRYING OUT SAID METHOD
PROCEDE DE PRODUCTION D'UN ELEMENT CONSTITUTIF PAR DEFORMATION D'UNE PLATINE ET DISPOSITIF APPROPRIE POUR METTRE LEDIT PROCEDE EN OEUVRE

(30) Priorität: 13.02.2004 DE 102004007071
(43) Veröffentlichungstag der Anmeldung: 20.12.2006
(73) Patentinhaber: AUDI AG, 85045 Ingolstadt (DE)
(72) Erfinder: SCHIESSL, Gerhard, 85092 Kösching (DE)
(74) Vertreter: Geissler, Manfred
(86) Internationale Anmeldenummer: PCT/EP2005/000853
(87) Internationale Veröffentlichungsnummer: WO 2005/078144

(56) Entgegenhaltungen:
- EP-A- 1 380 666
- DE-C1- 10 212 400
- US-A- 4 517 229
- US-B1- 6 185 977
- PATENT ABSTRACTS OF JAPAN Bd. 2003, Nr. 11, 5. November 2003 (2003-11-05) -& JP 2003 181549 A (NIPPON STEEL CORP), 2. Juli 2003 (2003-07-02)

## Beschreibung

Die Erfindung bezieht sich auf ein Verfahren zur Herstellung eines Bauteils durch Umformen einer beschichteten, vorzugsweise aluminiumbeschichteten Platine aus einem Vergütungsstahl nach dem Oberbegriff des Patentanspruches 1. Die Erfindung betrifft des weiteren eine Vorrichtung zur Durchführung des Verfahrens.

Im Stand der Technik sind verschiedene Umformverfahren für Platinen aus einem Vergütungsstahl in Verbindung mit Härtungsprozessen allgemein bekannt. Bei einem sogenannten "direkten" Umformverfahren wird eine ebene Platine aus einem Vergütungsstahl in einem Ofen, vorzugsweise einem Durchlaufofen, unter Schutzgasatmosphäre austenitisiert. Beispielsweise kann ein Vergütungsstahl in der Qualität 22MnB5 verwendet werden, der für die Austenitisierung mehrere Minuten bei ca. 950°C geglüht wird. Anschließend wird mit einer vorzugsweise automatisierten Transfereinrichtung die heiße austenitisierte ebene Platine in ein für Serienprozesse gekühltes Umform-/Vergütungswerkzeug eingelegt. Dieses Werkzeug ist Bestandteil einer Presse und beim Schließen derselben wird die heiße Platine zu einem Bauteil auf Endform umgeformt und im geschlossenen Werkzeug bei aufgebrachter Schließkraft relativ schnell abgekühlt und dadurch gehärtet. Das gehärtete Bauteil wird aus dem Werkzeug entnommen und, falls es sich um ein unbeschichtetes Blech handelt, in einem Reinigungsschritt beispielsweise durch Sand- oder Kugelstrahlen entzundert (dies ist bei beschichteten Bauteilen entbehrlich, da z. B. aluminierte Bleche ausreichend Korrosionsschutz bieten und eine Verzunderung verhindert wird). Abschließend folgt ein Fertigkontur- und Lochbeschnitt des fertig geformten und gehärteten Bauteiles, vorzugsweise mittels Laserschneiden. Auch ein mechanisches Schneiden im sogenannten Pressenverbund ist denkbar.

Während der Wärmebehandlung im Ofen erfährt z. B. eine im Ausgangszustand etwa 25 µm starke Aluminiumbeschichtung ein Schichtdickenwachstum auf etwa 45 µm, wobei sich unmittelbar an das Grundmaterial der Platine angrenzend eine AlSi-Schicht mit eindiffundiertem Eisen heraus bildet, die eine darüber hinaus sich bildende, relativ harte und spröde AlSi-Schicht trägt, die die eigentliche Korrosionsschutzfunktion erfüllt.

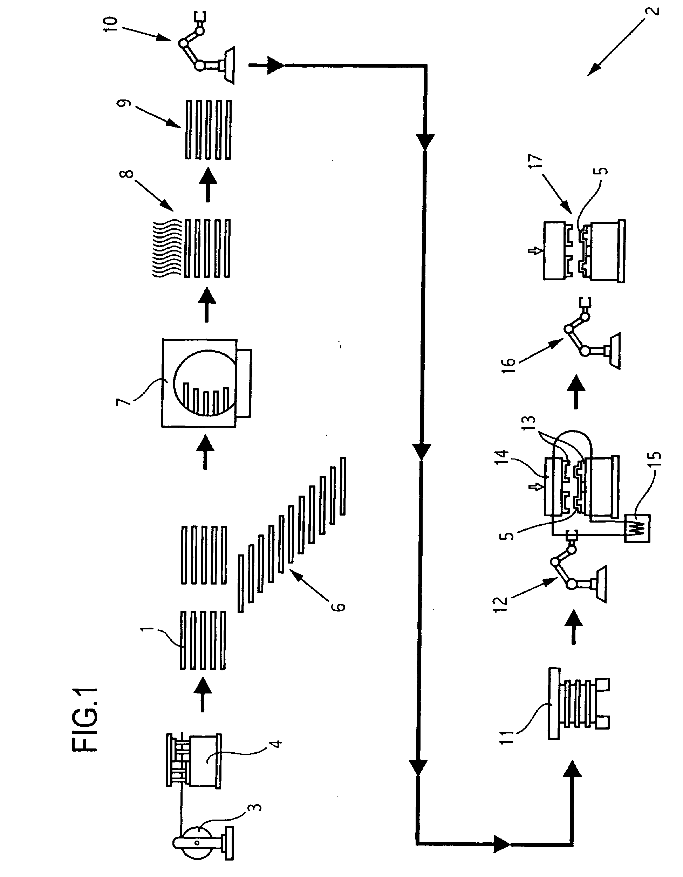

Ein typischer Verfahrensablauf (Warmumformkurve 20) hinsichtlich der Wärmebehandlung der Platine im Zuge ihres Umformens ist beispielsweise in Fig. 1 in einem Zeit- Temperatur- Diagram dargestellt. Je nach verwendeter Vergütungsstahlqualität, Blechdicke, Ausgangsschichtdicke u.s.w. sind die in Fig.1 angegebenen Werte natürlich auch gewissen Schwankungen unterworfen (Wärmebehandlungunter- / obergrenze 18, 19). So ist ohne weiteres denkbar, dass die Platine sich über eine Verweildauer von bis zu 30 Minuten im Ofen befindet.

Der verwendete Ofen ist häufig ein sogenannter Durchlaufofen mit Formnestem oder Platinenaufnahmen oder ein Rostdurchschubofen mit Rosten, welche die Platine tragen und diese innerhalb von etwa 2 Minuten mittels Gasbrenner auf Austenitisierungstemperatur erwärmen und anschließend mehrere Minuten mittels elektrischer Heizung auf dieser Temperatur halten. Vorzug des Gasbrenners ist eine höhere Leistung, wohingegen elektrische Heizungen besser regelbar sind.

Gemäß Fig. 1 wird also die Platine im Ofen auf eine Solltemperatur von etwa 950° C erhitzt und auf dieser Temperatur gehalten. Die Austenitisierung vollzieht sich bei Temperaturen oberhalb etwa 720° C. Üblicherweise beträgt die Verweildauer im Ofen ca. 9 Minuten, wobei sich die Platine innerhalb der ersten beiden Minuten auf Solltemperatur erwärmt, während in den darauffolgenden etwa 7 Minuten das Umkörnen des Grundmaterials vom kubisch- raumzentrierten Ferrit/Perlit- Gefüge ins kubisch- flächenzentrierte Austenit, das für ein Härten notwendig ist, vonstatten geht. Daneben ist die genannte Zeitspanne vor allem auch wichtig, um ein ausreichendes Anwachsen der AlSi-Schutzschicht zu erreichen.

Insbesondere hinsichtlich minimaler Glühtemperatur und maximaler Verweildauer der Platine im Ofen gibt es gewisse, mehr oder weniger enge Grenzen, innerhalb derer der Prozess noch Gutteile liefert, d. h., dass die aus dem Ofen entnommenen Platinen überhaupt noch für den Umformprozess und die weitere Verwendung verwertbar sind.

Stellt sich nun im weiteren Ablauf eine Störung ein, sei es bei der Entnahme einer Platine aus dem Ofen und ihrem Weitertransport zum Umform-/ Vergütungswerkzeug bzw. innerhalb der Station des Fertigkontur- und Lochbeschnittes, so kann für die Dauer der Störung keine Platine mehr aus dem Ofen entnommen werden, die maximal zulässige Verweildauer wird in der Regel überschritten und sämtliche im Ofen befindlichen Platinen sind Ausschuss und müssen von daher entsorgt werden.

Der Erfindung liegt die Aufgabe zugrunde, das gattungsgemäße Verfahren zur Herstellung eines Bauteiles durch Umformen einer beschichteten Platine aus einem Vergütungsstahl in der Weise weiterzubilden, dass eine Optimierung im Prozessablauf erreichbar ist und dass insbesondere bei eventuellen Prozessstörungen dem kostenträchtigen Anfallen von Ausschussplatinen vorgebeugt werden kann.

Diese Aufgabe wird hinsichtlich des Verfahrens mit den weiteren Merkmalen nach dem Kennzeichen des Patentanspruches 1 und hinsichtlich der Vorrichtung zur Durchführung des erfindungsgemäßen Verfahrens mit den Merkmalen des Patentanspruches 10 gelöst.

Die Vorteile der erfindungsgemäßen Vorgehensweise sind mannigfaltig. So besteht nun keine Abhängigkeit mehr bezüglich der Verweildauer der Platinen innerhalb des Ofens und Ablaufstörungen im Prozess außerhalb des Ofens. Durch die Entkopplung der Abläufe ergibt sich für den eigentlichen Prozess der Platinenumformung ein geringerer Flächenbedarf und ein Weniger an Infrastruktur. Eine Pufferung / Zwischenlagerung der wärmebehandelten Platinen ist möglich, so dass eine Wärmebehandlung, unter anderem zur Beeinflussung der AlSi-Schicht, ohne weiteres auch bereits beim Stahlhersteller bzw. Blechlieferanten erfolgen kann.

Eine solche ausgelagerte, vorgeschaltete Wärmebehandlung ist an sich bereits bekannt, wie aus der EP 0 946 311 B1 und der DE 102 12 400 C1 hervorgeht. Auch eine Glühbehandlung mittels Induktionserwärmung ist für sich gesehen bereits bekannter Stand der Technik, wie dies im letztgenannten Dokument beispielsweise auch erwähnt ist.

Vorteilhafte Ausgestaltungen und Weiterbildungen der Erfindung sind in den jeweiligen Unteransprüchen beansprucht.

Die Erfindung ist nachstehend anhand eines Ausführungsbeispieles näher erläutert. In der Zeichnung zeigen:
- Fig. 1: den erfindungsgemäßen Verfahrensablauf zur Herstellung eine Bauteiles durch Umformen einer Platine,
- Fig. 2: ein Temperatur- Zeit- Diagramm der ersten Platinen- Wärmebehandlung und
- Fig. 3: ein Temperatur- Zeit- Diagramm der zweiten Platinen- Wärmebehandlung.

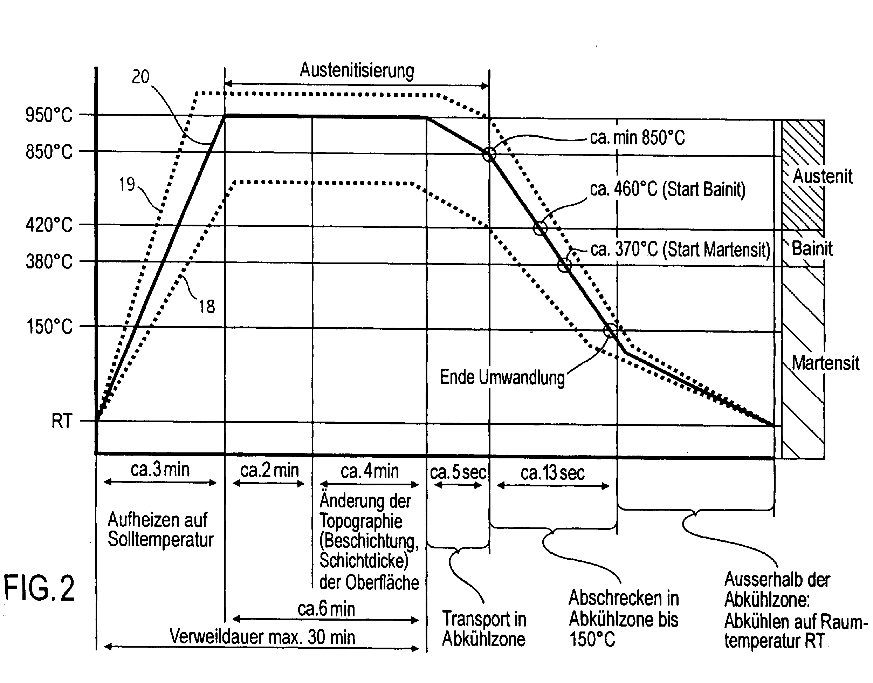

In Fig. 1 ist schematisch der erfindungsgemäße Verfahrensablauf zur Herstellung eines Bauteiles 5 durch Umformen einer beschichteten Platine 1 aus einem Vergütungsstahl mittels einer hierfür geeigneten Vorrichtung 2 gezeigt. Von dem im aufgerolltem Zustand angelieferten Stahl, einem sogenannten Coil 3, wird mittels eines Werkzeuges 4 der Stahl abgerollt, geglättet und die für das fertige Bauteil 5 notwendige Größe der Platine 1 ausgestanzt bzw. abgeschnitten. Von dort aus werden die Platinen 1 einer Pufferzone 6 zugeführt. Dieses Zwischenlagern ist allerdings nicht unbedingt erforderlich, vielmehr können die Platinen 1 auch unmittelbar nach Verlassen des Werkzeuges 4 einem ersten Ofen 7 zugeführt werden, in dem sie eine Wärmebehandlung gemäß dem Temperatur- Zeit- Diagramm nach Fig. 2 erfahren. Unmittelbar dem ersten Ofen 7 nachgelagert ist eine Abkühlzone 8, in der die Platinen 1 abgeschreckt werden und die abschließenden Phasen der Wärmebehandlung durchlaufen. Die Abkühlzone 8 verlassend werden die wärmebehandelten Platinen 1 einem Zwischenlager 9 zugeführt.

Der erste Ofen 7 kann vom konstruktiven Aufbau her ein bereits erwähnter Durchlaufofen, ein Karussell- Ofen oder dergleichen sein.

Die einzelnen Phasen der Wärmebehandlung wurden bereits eingangs mit Hinweis auf Fig. 2 erläutert. Das relativ langsam vonstatten gehende Aufheizen auf Solltemperatur sowie die übrige Verweildauer im ersten Ofen 7 zum Herbeiführen der Austenitisierung und zum Verändern der Topographie (Beschichtungsaufbau, Schichtdicke) summiert sich auf eine Gesamt- Verweildauer von etwa 9 Minuten, wobei erfahrungsgemäß eine maximale Verweildauer von 30 Minuten nicht überschritten werden darf, damit die Platine nicht unbrauchbar wird. Der Transport in die Abkühlzone 8 und die dortige Abschreckung der Platine 1 vollzieht sich innerhalb relativ kurzer Zeiträume, während ein restliches Abkühlen auf Raumtemperatur RT im Zwischenlager 9 erfolgen kann. Am Ende der Wärmebehandlung weist die Platine 1 ein Martensitgefüge auf.

Mittels einer geeigneten Transportvorrichtung 10, beispielsweise einem Gelenkarmroboter, werden die Platinen 1 einem Induktionsofen 11 zugeführt, von wo aus sie über eine weitere Transportvorrichtung 12, z. B. wiederum ein Gelenkarmroboter, in ein für Serienprozesse geeignetes, gekühltes Umfbrm-/Vergütungswerkzeug 13 eingelegt werden. Diesem ist eine Presseneinrichtung 14 sowie eine Kühlvorrichtung 15 zugeordnet, und beim Schließen der Presseneinrichtung 14 wird die heiße Platine 1 zu einem Bauteil 5 auf Entform umgeformt und im geschlossenen Umforin-/Vergütungswerkzeug 13 bei aufgebrachter Schließkraft schnell abgekühlt und dadurch gehärtet. In einem letzten Verfahrenschritt wird jedes Bauteil 5 über eine Transportvorrichtung 16 einer Beschnittvorrichtung 17 zugeführt, wo ein Fertigkontur- und Lochbeschnitt des fertig geformten und gehärteten Bauteiles 5 vorzugsweise mittels Laserschneiden durchgeführt wird. Selbstverständlich kann dies auch über geeignete Beschnittmesser auf mechanischem Wege erfolgen.

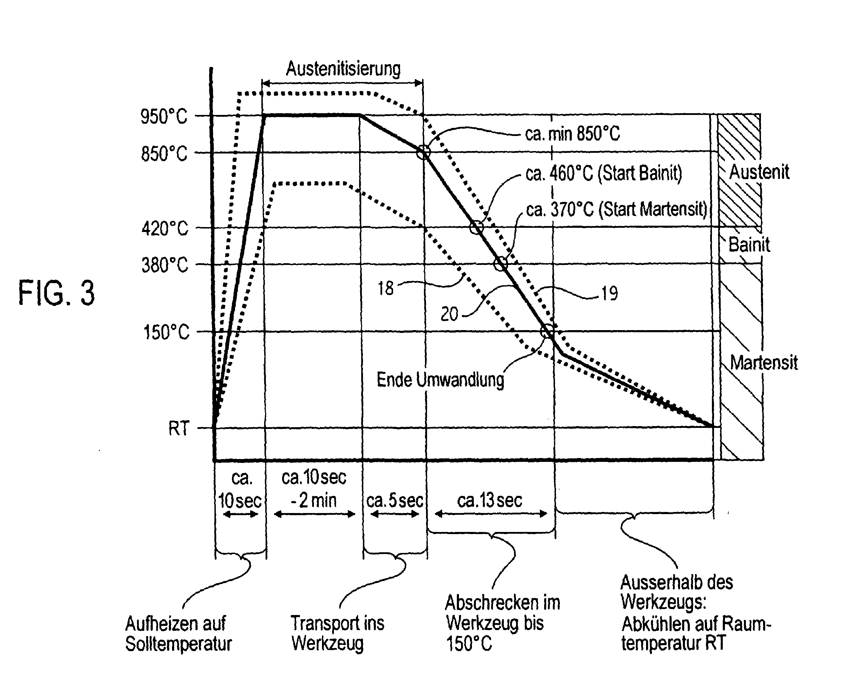

Die im Induktionsofen 11 und im nachgeschalteten Umform-/Vergütungswerkzeug 13 vonstatten gehende Wärmebehandlung der Platine 1 ist im Temperatur- Zeit- Diagramm gemäß Fig. 3 anhand der Warmumformkurve 20 und der Wärmebehandlungsunter- / obergrenze 18, 19 dargestellt. Sie ist gekennzeichnet durch eine ausgesprochen kurze Verweildauer der Platine im Induktionsofen 11. Während das Aufheizen auf Solltemperatur (Austenitisierungstemperatur) innerhalb weniger Sekunden (ca. zehn sec.) erfolgt dient eine nachgeschaltete kurze Verweilzeit von etwa zehn Sekunden bis maximal zwei Minuten dazu, eine Gefügeumwandlung vonstatten gehen zu lassen. Eine Änderung von Dicke und Aufbau der Beschichtung ist nicht mehr erforderlich, da dies bereits im ersten Ofen 7 erfolgt ist. Nach demzufolge äußerst kurzer Verweildauer im Induktionsofen 11 kann die Platine bereits dem Umfom-/Vergütungswerkzeug 13 zugeführt werden, in dem neben der Umformung das Abschrecken in gleicher Weise (gleicher Verlauf der Warmumformkurve 20) vonstatten geht wie in der Abkühlzone 8. Beim Verlassen des Umform-/Vergütungswerkzeuges 13 weist das Bauteil 5 bereits Martensitgefüge auf, die Abkühlung auf Raumtemperatur RT kann beim Weitertransport zur bzw. innerhalb der Beschnittvorrichtung 17 erfolgen.

Auf diese Weise wurde eine eine ursprüngliche Zugfestigkeit von etwa 500 bis 600 N/mm² aufweisende Platine 1 in ein eine Zugfestigkeit von etwa 1300 bis 1500 N/mm² aufweisendes Bauteil 5 umgeformt.

In vorteilhafter Weiterbildung der Erfindung wäre denkbar, im Induktionsofen 11 die Platine 1 partiell unterschiedlich stark zu erwärmen, mit der Folge, dass, falls dies gewünscht ist, das umgeformte und abgeschreckte Bauteil 5 partiell unterschiedliche Festigkeiten aufweist.

Weiter wäre vorteilhaft möglich, die Platine 1 vor der zweiten Wärmebehandlung (Induktionsofen 11) zum Beispiel durch Aufschweißen von Verstärkungsblechen (Patches) lokal zu verstärken. Ein solchermaßen gepatchtes Verbundblech könnte dann dem zweiten Ofen und danach dem Umform-/Vergütungswerkzeug 13 zugeführt werden. Dies hätte insgesamt positive Auswirkungen auf die Werkstoffeigenschaften und die Formgenauigkeit.

Das erfindungsgemäße Verfahren ist auch bei Verwendung von Tailored blanks Platinen vorteilhaft anwendbar.

Ein wesentlicher Vorteil der Erfindung ist die Möglichkeit der Entkopplung der einzelnen Verfahrensschritte. So kann die erste Wärmebehandlung im Ofen 7 bereits beim Stahl- bzw. Blechhersteller erfolgen und die so vorbehandelten Platinen 1 können dann dem weiterverarbeitenden Unternehmen (z. B. Fahrzeughersteller) bereitgestellt werden (Zwischenlager 9).

In einer weiteren vorteilhaften Weiterbildung der Erfindung ist denkbar, der Transportvorrichtung 10 einen Induktor zuzuordnen bzw. diesen in die Transportvorrichtung 10 baulich zu integrieren, so dass die Wärmebehandlung der Platine 1 während ihres Transportes zum Umform-/Vergütungswerkzeug 13 vonstatten gehen kann. Ein separater Induktionsofen 11 sowie eine diesem nachgeschaltete weitere Transportvorrichtung 12 könnten dadurch entfallen.

## Patentansprüche

1. Verfahren zur Herstellung eines Bauteils (5) durch Umformen einer beschichteten, vorzugsweise aluminiumbeschichteten Platine (1) aus einem Vergütungsstahl, wobei vor dem Umformen in einem ersten Verfahrensschritt die Platine einem ersten Ofen (7) zugeführt und dort austenitisiert wird und wobei die Verweildauer der Platine im ersten Ofen (7) so gewählt wird, dass neben der Gefügeumwandlung ein Schichtdickenwachstum vonstatten geht, wobei folgende weitere Verfahrensschrittel ausgeführt werden:
- schnelles Abkühlen und anschließendes Zwischenlagern der wärmebehandelten Platine (1)
- erneutes, kurzzeitiges Erwärmen der Platine (1) in einem zweiten Ofen (11) auf Austenitisierungstemperatur unmittelbar vor dem Umformen zum Bauteil (5) und
- nach erfolgter Gefügeumwandlung Umformen und Härten der Platine (1).

2. Verfahren nach Patentanspruch 1, **gekennzeichnet durch** eine Verweildauer im ersten Ofen (7) zwischen neun Minuten und dreißig Minuten.

3. Verfahren nach Patentanspruch 1, **dadurch gekennzeichnet, dass** bei der wiederholten Erwärmung der Platine (1) auf Austenitisierungstemperatur im zweiten Ofen (11) die Verweildauer so gewählt wird, dass lediglich eine Gefügeumwandlung, aber kein Schichtdickenwachstum mehr statt findet.

4. Verfahren nach Patentanspruch 3, **gekennzeichnet durch** eine Verweildauer der Platine (1) im zweiten Ofen (11) von zehn Sekunden bis zweieinhalb Minuten.

5. Verfahren nach Patentanspruch 1, **dadurch gekennzeichnet, dass** die Erwärmung der Platine (1) im ersten Ofen (7) auf Elektro- oder Gas-Basis erfolgt, während die Erwärmung im zweiten Ofen (11) durch Induktion vonstatten geht.

6. Verfahren nach Patentanspruch 1, **dadurch gekennzeichnet, dass** die erste Erwärmung beim Stahl- bzw. Blechhersteller erfolgt, während die zweite Wärmebehandlung beim weiterverarbeitenden Unternehmen, z. B. Fahrzeughersteller, vonstatten geht.

7. Verfahren nach Patentanspruch 1, **dadurch gekennzeichnet, dass** während der zweiten Wärmebehandlung die Platine (1) über ihre Oberfläche unterschiedlich stark erwärmt wird.

8. Verfahren nach Patentanspruch 1, **dadurch gekennzeichnet, dass** die Platine (1) vor dem erneuten Erwärmen im zweiten Ofen (11) durch Aufbringen von mindestens einem Verstärkungsblech lokal verstärkt wird.

9. Verfahren nach Patentanspruch 1, **gekennzeichnet durch** die Verwendung eines Tailored blanks als Platine (1).

10. Vorrichtung zur Durchführung des Verfahrens nach einem der Patentansprüche 1-9, enthaltend
- ein Werkzeug (4) zum Herstellen von Platinen (1) aus einem Coil (3),
- einen ersten Ofen (7) zur ersten Wärmebehandlung einschließlich Herbeiführen eines Schichtdickenwachstums der Platinen (1),
- eine Abkühlzone (8) für die Platinen (1),
- ein Zwischenlager (9) für die Platinen (1),
- einen zweiten Ofen (11) zur erneuten Wärmebehandlung der Platinen (1),
- ein Umform-/Vergütungswerkzeug (13) mit einer Presseneinrichtung (14) und einer Kühlvorrichtung (15) und
- eine Beschnittvorrichtung (17) zur Herstellung eines Fertigkontur- und Lochbeschnittes.

11. Vorrichtung nach Patentanspruch 10, **gekennzeichnet durch** einen ersten Ofen (7) auf Elektro-und/oder Gas-Basis und einen Induktionsofen (11) zur zweiten Wärmebehandlung.

12. Vorrichtung nach Patentanspruch 11, **dadurch gekennzeichnet, dass** ein Induktor in eine Transportvorrichtung (10) integriert ist, die zwischen Zwischenlager (9) und Umform-Vergütungswerkzeug (13) angeordnet ist.

13. Vorrichtung nach Patentanspruch 10, **dadurch gekennzeichnet, dass** zwischen der Abkühlzone (8) und dem zweiten Ofen (11) eine Station zum Aufbringen, insbesondere Aufschweißen, von mindestens einem Verstärkungsblech auf die Platine (1) angeordnet ist.

## Claims

1. Process for producing a component (5) by shaping a coated, preferably aluminium-coated, plate bar (1) made of heat-treatable steel, whereby the plate bar is conveyed to a first oven (7) and is there austenitized before shaping in a first process stage, and whereby the time-period during which the plate bar stays in the first oven is chosen such that a change in layer-thickness occurs together with the structural transformation, whereby the following, further process stages are carried out:
- fast cooling and ensuing intermediate storage of the heat-treated plate bar (1)
- renewed, brief heating of the plate bar (1) in a second oven (11) to an austenitization temperature immediately before shaping to form the component part (5) and,
- after the structural transformation has occurred, shaping and hardening of the plate bar (1).

2. Process in accordance with claim 1, **characterized by** a time period of between nine and thirty minutes in the first oven (7).

3. Process in accordance with claim 1, **characterized in that**, in the case of repeated heating of the plate bar (1) to austenitization temperature in the second oven (11) the time period is selected such that only one structural transformation, but no increase in layer-thickness, occurs.

4. Process in accordance with patent claim 3, **characterized by** a time-period, during which the plate bar remains in the second oven (11), of between ten seconds and two and a half minutes.

5. Process in accordance with claim 1, **characterized in that** the heating of the plate bar (1) occurs in the first oven (7), using gas or electricity, while the heating in the second oven (11) proceeds by means of induction.

6. Process in accordance with patent claim 1, **characterized in that** the first heating occurs at the plant of the steel or sheet metal manufacturer, while the second heat treatment occurs on the premises of firms carrying out further processing, eg. vehicle manufacturers.

7. Process in accordance with claim 1, **characterized in that** the plate bar (1) is heated strongly over its surface during the second heat treatment.

8. Process in accordance with claim 1, **characterized in that** the plate bar (1) is locally reinforced by applying at least one reinforcing plate, before renewed heating in the second oven (11).

9. Process in accordance with claim 1, **characterized by** the use of a tailored blank as plate bar (1).

10. Device for carrying out the process in accordance with one of claims 1-9, including:
- a tool (4) for producing plate bars (1) from a coil (3),
- a first oven (7) for the first heat treatment including the bringing about of an increase in the layer-thickness of the plate bars (1),
- a cooling zone (8) for the plate bars (1),
- an intermediate store (9) for the plate bars (1),
- a second oven (11) for renewed heat-treatment of the plate bars (1),
- a shaping/tempering tool (13) with a pressure device (14) and a cooling device (15) and
- a cutting device (17) for producing a finished outline form and for cutting or trimming a hole.

11. Device in accordance with claim 10, **characterized by** a first oven (7) operating on electricity and/or on gas, and by an induction oven (11) for the second heat-treatment.

12. Device in accordance with claim 11, **characterized in that** an inductor is integrated into a conveying device (10) that is disposed between the intermediate storage means (9) and the shaping/tempering tool (13).

13. Device in accordance with claim 10, **characterized in that**, between the cooling zone (8) and the second oven (11), there is a station, for applying, particularly welding, at least one reinforcing plate onto the plate bar (1).

## Revendications

1. Procédé en vue de la fabrication d'un composant de construction (5) par formage d'un flan (1) en un acier de traitement revêtu, de préférence revêtu d'aluminium, le flan étant acheminé avant le formage, dans une première étape de procédé, à un premier four (7) et y subissant une austénitisation, le temps de séjour du disque dans le premier four (7) étant choisi de telle sorte qu'outre la transformation de la structure, il se produit une croissance d'épaisseur de couche, en suite de quoi les étapes de procédé suivantes supplémentaires étant effectuées:
- un refroidissement rapide et un stockage intermédiaire subséquent du flan traité par voie thermique (1),
- un nouvel échauffement de courte durée du disque (1) dans un second four (11) à la température d'austénitisation immédiatement avant le formage en composant de construction (5)
et
- après achèvement de la transformation de la structure, un formage et un durcissement du flan (1).

2. Procédé selon la revendication 1, **caractérisé par** un temps de séjour dans le premier four (7) compris entre neuf minutes et trente minutes.

3. Procédé selon la revendication 1, **caractérisé en ce que**, lors de l'échauffement répété du flan (1) à la température d'austénitisation dans le second four (11), le temps de séjour est choisi de telle sorte qu'il se produit simplement une transformation de structure, mais qu'il ne se produit plus aucune croissance d'épaisseur de couche.

4. Procédé selon la revendication 3, **caractérisé par** un temps de séjour du flan (1) dans le second four (11) de dix secondes à deux minutes et demie.

5. Procédé selon la revendication 1, **caractérisé en ce que** l'échauffement du flan (1) dans le premier four (7) se fait par voie électrique ou à l'aide de gaz, alors que l'échauffement dans le second four (11) procède par induction.

6. Procédé selon la revendication 1, **caractérisé en ce que** le premier échauffement a lieu chez le fabricant d'acier ou de tôles, alors que le second traitement thermique se produit dans l'entreprise de mise en oeuvre ultérieure, par exemple, chez le fabricant d'automobiles.

7. Procédé selon la revendication 1, **caractérisé en ce que**, pendant le second traitement thermique, le flan (1) est chauffé sur l'ensemble de sa surface d'une manière fort différente.

8. Procédé selon la revendication 1, **caractérisé en ce que**, avant le nouvel échauffement, le flan (1) est renforcé localement dans le second four (11) par application d'au moins une tôle de renforcement.

9. Procédé selon la revendication 1, **caractérisé par** l'utilisation d'une ébauche faite sur mesure en tant que flan (1).

10. Dispositif en vue de l'exécution du procédé selon l'une quelconque des revendications 1-9, contenant
- un outil (4) en vue de la fabrication de flans (1) à partir d'une bobine (3),
- un premier four (7) en vue du premier traitement thermique, y compris le déclenchement d'une croissance d'épaisseur de couche des flans (1),
- une zone de refroidissement (8) pour les flans (1),
- un magasin intermédiaire (9) pour les flans (1),
- un second four (11) en vue du traitement thermique renouvelé des flans (1),
- un outil de transformation/de traitement (13) ayant un équipement de presse (14) et un dispositif de refroidissement (15) et
- un dispositif de coupe (17) en vue de la fabrication d'une découpe finale du contour et des alésages.

11. Dispositif selon la revendication 10, **caractérisé par** un premier four (7) opérant par voie électrique ou à l'aide d'un gaz et par un four d'induction (11) en vue du second traitement thermique.

12. Dispositif selon la revendication 11, **caractérisé en ce qu'**un inducteur est intégré dans un dispositif de transport (10), qui est disposé entre le magasin intermédiaire (9) et l'outil de formage-traitement (13).

13. Dispositif selon la revendication 10, **caractérisé en ce qu'**entre la zone de refroidissement (8) et le second four (11), un poste est disposé en vue de l'application, en particulier de la soudure, d'au moins une tôle de renforcement sur le flan (1).
